# EUROPÄISCHE PATENTANMELDUNG

(11) **EP 3 015 256 A1**
(43) Veröffentlichungstag der Anmeldung: **04.05.2016**
(21) Anmeldenummer: 14190487.0
(22) Anmeldetag: 27.10.2014
(51) Int. Cl.: B29C 70/52, B29C 70/46, B29C 70/86, B29D 99/00

(54) **Herstellung mehrere unterschiedlicher Faserverbundbauteile für Großserien in einem kontinuierlichen Prozess**

(71) Anmelder: Evonik Röhm GmbH, 64293 Darmstadt (DE)
(72) Erfinder: BÜHLER, Sebastian, 79104 Freiburg (DE); KRISHNAMOORTHY, Sivakumara K.,, 64319 Pfungstadt (DE); BERLIN, Mark Reinhard, 45665 Recklinghausen (DE); SEMLITSCH, Karl-Heinz, 8680 Mürzzuschlag (AT)

(57) **Zusammenfassung**

Die vorliegende Erfindung betrifft ein neuartiges Verfahren zur Herstellung von neuen faserverstärkten Profilwerkstoffen, die mit einem Hartschaumkern, insbesondere einem PMI-Schaumkern gefüllt sind. Insbesondere betrifft die vorliegende Erfindung ein neuartiges Verfahren, welches in verschiedenen Varianten mit einem besonders hohen Durchsatz und einer hohen Variabilität bezüglich der Formgebung durchführbar ist. Dabei wird in einem Verfahrensschritt ein komplexer faserverstärkter Profilwerkstoff kontinuierlich hergestellt und gleichzeitig mit dem Hartschaumkern gefüllt. Weiterhin wird im gleichen Verfahrensschritt eine sehr gute Anbindung des Hartschaumkerns an das faserverstärkte Profilmaterial gewährleistet. Darüber hinaus erfolgt die Formgebung in mindestens zwei Werkzeugen gleichzeitig, so dass ein besonders hoher Durchsatz erzielt werden kann und gleichzeitig Profilwerkstoffe unterschiedlicher Form produziert werden können.

## Beschreibung

### Gebiet der Erfindung

Die vorliegende Erfindung betrifft ein neuartiges Verfahren zur Herstellung von neuen faserverstärkten Profilwerkstoffen, die mit einem Hartschaumkern, insbesondere einem PMI-Schaumkern gefüllt sind. Insbesondere betrifft die vorliegende Erfindung ein neuartiges Verfahren, welches in verschiedenen Varianten mit einem besonders hohen Durchsatz und einer hohen Variabilität bezüglich der Formgebung durchführbar ist. Dabei wird in einem Verfahrensschritt ein komplexer faserverstärkter Profilwerkstoff kontinuierlich hergestellt und gleichzeitig mit dem Hartschaumkern gefüllt. Weiterhin wird im gleichen Verfahrensschritt eine sehr gute Anbindung des Hartschaumkerns an das faserverstärkte Profilmaterial gewährleistet. Darüber hinaus erfolgt die Formgebung in mindestens zwei Werkzeugen gleichzeitig, so dass ein besonders hoher Durchsatz erzielt werden kann und gleichzeitig Profilwerkstoffe unterschiedlicher Form produziert werden können.

### Stand der Technik

Nach Stand der Technik können mit PMI-Schäumen gefüllte Hohlkörper mittels des so genannten In-Mold-Verfahren hergestellt werden. Dabei werden die fertigen Hohlkörper mit einem Granulat gefüllt, welches anschließend thermisch aufgeschäumt wird und dabei vernetzt. Nachteil dieses Verfahrens ist, dass man mehrere Verfahrensschritte, nämlich die Hohlkörperherstellung, das Füllen mit dem Granulat und das Aufschäumen benötigt. Ein weiterer Nachteil ist, dass aufgrund der relativ hohen Schäumungstemperaturen des PMI thermisch instabile Materialien, wie ein Composite aus Kohlefasern und einem Epoxidharz, nicht verwendet werden können. Darüber hinaus ist die beim Aufschäumen bewirkte Anbindung zwischen Schaum und Deckschicht nur schwach ausgebildet. Ein solches In-Mold-Verfahren ist beispielsweise in WO 2012/013393 beschrieben. PUR-Schaumfüllungen werden alternativ nach Stand der Technik als Flüssigkeit in den Hohlraum injiziert und anschließend aufgeschäumt und ausgehärtet. Dieses Verfahren bringt jedoch zum einen ähnliche Nachteile wie das beschriebene Verfahren zur PMI-Schaumfüllung mit sich und ist darüber hinaus nicht auf PMI übertragbar.

Alternativ können offene Schalenteile mit einem zugeschnittenen Schaumkern ausgefüllt werden und anschließend ein zweites Schalenteil unter Bildung des Hohlprofils mit dem ersten Schalenteil verklebt oder verschweißt werden. Zur besseren Anbindung des Schaumkerns, kann an den Grenzflächen darüber hinaus eine Klebeschicht aufgetragen werden. Nachteile dieses Verfahrens sind, dass sehr viele zeitaufwendige Prozessschritte benötigt werden, dass das Endprodukt Fügestellen aufweist, und dass bei der Herstellung des Schaumkerns je nach Form desselben eine große Menge Verschnittmaterial anfallen kann.

In einer Variante, wie sie in WO 2012/052219 beschrieben ist, wird der Schaumkern zusammen mit dem Gewebematerial - wie z.B. Kohlefasern - in einer Form eingelegt und das Harz - z.B. Epoxidharz - in diese Form eingespritzt und ausgehärtet. Zwar werden hier Fügestellen vermieden, dafür weist dieses Verfahren in Bezug auf Verschnitt, Prozessgeschwindigkeit und Aufwendigkeit die gleichen Nachteile wie das zuvor beschriebene Verfahren auf.

Das Pultrusionsverfahren, das auch unter dem deutschen Namen Strangziehverfahren bekannt ist, ist ein etabliertes Verfahren, das auf erste Entwicklungen Anfang der 1950er Jahre zurückgeht. Das Pultrusionsverfahren wird dazu verwendet, kontinuierlich faserverstärkte Kunststoffprofile, wie z.B. auch Hohlprofile, insbesondere Rohre, herzustellen. Ursprünglich wurden dabei mehrere Glasfasern (Glasrovings) mit einem Polyester- oder einem Epoxidharz imprägniert, anschließend über ein oder mehrere Formgebungswerkzeuge in die endgültige Form zusammengeführt. Abschließend wird das Harz ausgehärtet und das kontinuierlich produzierte Profil zu einzelnen Werkstücken zersägt.

Bei dem Pultrusionsverfahren handelt es sich insbesondere um ein Verfahren, bei dem in einem ersten Verfahrensschritt mehrere Fasern oder Rovings mit einem Harz getränkt werden. Man unterscheidet dabei zwischen einem so genannten offenen Pultrusionsverfahren, bei dem diese Harztränkung in einer Tränkwanne erfolgt, durch die die Fasern geführt werden, und einem geschlossenen Verfahren, bei dem die Tränkung mit dem Harz erst in dem eigentlichen formgebenden Instrument unter Druck erfolgt. In der Regel weisen die Anlagen vor der Tränkung Vorrichtungen, wie z.B. Kadiergitter, auf, mittels derer die Fasern in eine zur späteren Formgebung nötige Verteilung gebracht werden und optional vorgelegte Rovings in einzelne Fasern aufgebrochen werden können. Es ist auch möglich alternativ oder ergänzend zu Rovings bzw. Fasern Vliese, Gewebe und/oder Gelege als Fasermaterial einzusetzen.

In der internationalen Patentanmeldung WO 2013/174665 ist ein so genanntes Pul-Core-Verfahren zur Herstellung von Profilen mit einem Schaumkern und einer Composite-Ummantelung beschrieben. Ein solches Verfahren ist jedoch auf die Herstellung von gleichbleibenden, z.B. rohrförmigen Querschnitten beschränkt. Komplexere Formen, wie z.B. im einfachsten Fall Variationen des Querschnitts im Profilwerkstoff, können nach Stand der Technik nur mittels einem zeitaufwendigen Hand-Layup-Verfahren oder einem diskontinuierlichen RTM-Verfahren (Resin Transfer Molding) realisiert werden.

In der Europäischen Patentanmeldung mit dem Anmeldeaktenzeichen 13190866 sind Pul-Shape- und Pul-Press-Verfahren zur Herstellung von faserverstärkten und Schaumkern gefüllten Profilen offenbart. Dieses Verfahren ist gegenüber allen anderen im Stand der Technik offenbarten Verfahren deutlich schneller und führt zu deutlich gesteigerten Produktionsmengen. Jedoch ist auch diese Effektivität noch nicht optimal, da auf diese Weise maximal 30 bis 50 Profile pro Stunde hergestellt werden können.

### Aufgabe

Die der vorliegenden Erfindung zugrundeliegende Aufgabe war es vor allem, ein neuartiges, kontinuierlich durchführbares Verfahren zur Herstellung von faserverstärkten, mit einem Hartschaummaterial wie z.B. einem PMI-Schaum gefüllten Profilen, das auch für komplexe Formen oder Variationen des Querschnittes im Werkstücke geeignet ist und das gegenüber dem Stand der Technik zu besonders hohen Durchsätzen führt, zur Verfügung zu stellen.

Insbesondere war es Aufgabe der vorliegenden Erfindung, ein Verfahren zur Verfügung zu stellen, mit dem komplexe Profile in Sandwichbauweise mit Faser-Kunststoff-Verbund-Außenhaut (FKV-Haut) und Hartschaum-, insbesondere Poly(meth)acrylimid-Schaumkernen (P(M)I-Schaumkerne) in besonders große Stückzahlen realisiert werden können. Besonders große Ausbeute bedeutet dabei beispielsweise, dass mit einer einzelnen Anlage pro Stunde mindestens 50 Profile, die eine normale Stärke der faserverstärkten Außenhaut aufweisen, herstellen zu können. Eine besondere Teilaufgabe war es dabei, dass mit dem Verfahren mindestens 70 dieser Profile pro Stunde hergestellt werden können.

Darüber hinaus war es Aufgabe der vorliegenden Erfindung, dass ohne Stillstand und Umrüstung der Anlage mindestens 2 verschiedene Profile mit sich unterscheidender Form herstellen zu können.

Weiterhin war es Aufgabe der vorliegenden Erfindung, ein Verfahren zur Verfügung zu stellen, mittels dessen eine sehr gute Anbindung zwischen Schaumkern und äußeren Deckschichten ermöglicht wird. Weiterhin sollen mittels des erfinderischen Verfahrens auch bei der Schäumungstemperatur des PMI thermisch nicht belastbare Materialien als Deckmaterial verwendbar sein.

Darüber hinaus war es Aufgabe der vorliegenden Erfindung, neue, mit einem Hartschaumgefüllte Hohlprofile zur Verfügung zu stellen, die a) keine Klebschicht zwischen Deckmaterial des Hohlprofiles und dem Hartschaumkern aufweisen, b) keine Fügestellen aufweisen und c) eine gute Bindung zwischen Deckmaterial und Hartschaumkern haben.

Weitere Aufgaben können sich aus der Beschreibung, den Zeichnungen bzw. den Beispielen ergeben, ohne dass diese an dieser Stelle explizit genannt werden.

### Lösung

Gelöst werden die Aufgaben mittels eines neuartigen Verfahrens zur kontinuierlichen Herstellung von komplexen faserverstärkten, mit einem Hartschaumkern, insbesondere einem P(M)I-Schaumkern, bevorzugt einem PMI-Schaumkern gefüllten Profilen. Bei diesem Verfahren handelt es sich in den ersten Verfahrensschritten um ein Pultrusionsverfahren, bei dem in der Mitte ein Schaumkern - beispielsweise aus PMI - zugeführt wird, und in den abschließenden Verfahrensschritten um einen eher dem RTM-Verfahren ähnlichen Prozess. Ein Schaumkern wird dabei bevorzugt mittels einem dem Pultrusionsverfahren analogen Verfahren mit einem Fasermaterial umwickelt oder belegt, ohne dass dieses dabei jedoch bereits mit einem Harz getränkt ist. Die Tränkung mit dem Harz zur Bildung der Deckschicht aus dem Fasermaterial und dem Harz, bei dem es sich um einen Thermoplasten oder ein einen Duroplasten bildendes Reaktivharz handeln kann, erfolgt bevorzugt und in diesem Fall im Gegensatz zum bekannten Pultrusionsverfahren erst nach der Umwicklung des Schaumkerns. Zwar kann erfindungsgemäß die Tränkung des Fasermaterials mit dem Harz auch vor dem Umwickeln, z.B. mittels einer Führung der Fasern durch eine Harzwanne erfolgen, dieses Vorgehen hat jedoch gegenüber der bevorzugten Ausführungsform den Nachteil eines zusätzlichen Prozessschrittes.

Gegenüber dem Stand der Technik hat das vorliegende neuartige Verfahren insbesondere das Merkmal, dass die Formgebung nach der Umwicklung mit dem Fasermaterial gleichzeitig in mehreren Werkzeugen, insbesondere in ein oder zwei Werkzeugen erfolgt. Damit ist es möglich nahezu die doppelte bzw. sogar mehrfache Stückzahl in gleicher Zeit zu produzieren. Im Stand der Technik ist das auf einem Schlitten montierte Werkzeug zur Formgebung und zur optionalen Harzaushärtung der zeitlimitierende Faktor.

Insbesondere weist sich das erfindungsgemäße Verfahren folgende Verfahrensschritte auf:
a) Einführen von Schaumkernen und Verbinden des neu eingeführten Schaumkerns mit dem Ende des zuletzt eingeführten Schaumkerns in eine Pultrusionsanlage,
b) Umwickeln des Schaumkerns mit einem Fasermaterial,
c) Imprägnieren des gewickelten Fasermaterials mit einem Harz,
d) Gleichzeitiges Einlegen unterschiedlicher Abschnitte des umwickelten Schaumkerns in mindestens zwei Werkzeugen, wobei sich diese Werkzeugen auf in Reihe stehenden Werkzeugschlitten oder in Reihe auf einem Werkzeugschlitten, in Position 1 am Ende der Pultrusionsanlage befinden und Schließen der Werkzeuge,
e) Heizen der Werkzeuge, wobei ein Formen des umwickelten Schaumkerns, sowie ein optionales Aushärten des Harzes erfolgt,
f) Transport der Schlitten in Transportrichtung des umwickelten Schaumkerns in eine Position 2 und anschließendes Öffnen der Werkzeuge,
g) Schließen eines Transportwerkzeugs auf einem weiteren Schlitten in Position 2a, welcher sich in Transportrichtung des umwickelten Schaumkerns hinter den anderen Schlitten befindet und Transport des umwickelten Schaumkerns in Transportrichtung in eine Position 1a, sowie Rückführung der Werkzeugschlitten auf die Position 1,
h) Öffnen des Transportschlittens, Trennen einzelner Profile mittels Schneiden, Sägen oder einer anderen Methode und Entnahme des fertigen Werkstücks, sowie parallele Durchführung der Verfahrensschritte a) bis d).

Mit Ausnahme des Verfahrensschritts c) erfolgen die einzelnen Verfahrensschritte in der angegebenen Reihenfolge bzw. parallel zu einander. Wie bereits beschrieben kann Verfahrensschritt c) durchaus vor Verfahrensschritt b) erfolgen. In dieser Ausführungsform der Erfindung können die Fasern erst durch eine Imprägniervorrichtung, wie ein Imprägnierbad geführt und anschließend um den Schaumkern gewickelt werden.

Alternativ und bevorzugt erfolgt Verfahrensschritt c) zwischen den Verfahrensschritten d) und e), indem die Imprägnierung nach dem Schließen der Werkzeuge und vor dem Heizen innerhalb des Werkzeugs erfolgt. Bei dieser besonders bevorzugten Ausführungsform des Verfahrens handelt es sich um eine als Pul-Shape-Verfahren zu bezeichnete Variante. Bei diesem Pul-Shape-Verfahren werden die Verfahrensschritte c), d), e) und f) in den gleichen Universalwerkzeugen durchgeführt. Dies bedeutet, dass es sich bei diesem Werkzeug um eine auf Schlitten bewegte Vorrichtung, die beheizbar ist und in die das Harz eingeleitet wird, handelt. In diesem Formgebungswerkzeug erfolgen somit simultan zueinander die endgültige Formgebung, das Aushärten des Harzes, eine Kalibrierung und der Transport. Mit der Kalibrierung ist damit ein eher kurzes Tempern der Harzzusammensetzung gemeint. Insbesondere sind mit dieser Variante die Realisierung höherer Umformgrade und ein geringer Materialverschnitt möglich.

Eine etwas weniger bevorzugte Altenative zum Pul-Shape-Verfahren stellt das das so genannte Pul-Press-Verfahren dar. Bei diesem werden die Verfahrensschritte a) bis d) in voneinander getrennten Werkzeugen bzw. Vorrichtungen durchgeführt, optional wird zwischen Verfahrensschritten c) und d) in weiteren Werkzeugen ein Vorformen des umwickelten Schaumkerns durchgeführt. weiterhin erfolgt hier Verfahrensschritt c) zwingend vor Verfahrensschritt b).

Bevorzugt ist das erfindungsgemäße Verfahren derart ausgelegt, dass die Verfahrensschritte d) bis f) in zwei oder drei Werkzeugen parallel durchgeführt werden.

In einer besonderen Ausführungsform der Erfindung bilden die Werkzeuge der Verfahrensschritte d) bis f) unterschiedliche Formen ab. Somit ist das Verfahren dazu geeignet, zu Endprodukt mit unterschiedlichen Profilen zu führen.

Zu Verfahrensschritt a): Da der Schaumkern im Gegensatz zum Fasermaterial nicht auf Rollen mit mehreren hundert Metern Material vorgelegt werden kann, wird dieser bevorzugt in Form mehrerer, aneinander gereihter Einzelstücke kontinuierlich in die Pultrusionsanlage geführt. Dies kann händisch oder, insbesondere mit längennormierten Schaumstücken, automatisiert erfolgen. Diese Einzelstücke werden dann bevorzugt mittels Kleben, Stecken oder durch Hinzufügen eines Kupplungsstücks miteinander verbunden. Beim Stecken können die Schaumkerne dazu mit entsprechenden Nuten bzw. Aussparungen vorgefertigt sein. Beim Kleben ist es wichtig, dass der entsprechende Kleber schnell aushärtet. Das Auftragen des Klebers auf eine der Flächen kann dazu auch bei einem kontinuierlichen Betrieb händisch erfolgen. Kupplungsstücke wiederum können sich vorgefertigt jeweils an einem der beiden Enden der vorgelegten Schaumkernstücke befinden. Das zweite Schaumkernstück wird dann einfach in dieses Kupplungsstück gefahren. Alternativ kann es sich auch um zweiteilige Kupplungsstücke handeln, die sich komplementär an den beiden Enden des Schaumwerkstücks befinden und z.B. über einen einfach Clickmechanismus miteinander verbunden werden können. Idealerweise befinden sich diese Click-Stellen an Stellen des Schaumkerns, die später zwischen zwei fertigen Profilen gelegen sind.

Verfahrensschritt b): Die Wahl des geeigneten Fasermaterials, mit dem in Verfahrensschritt b) der Schaumkern umwickelt wird, stellt für den Fachmann kein Problem dar, da die verarbeitbaren Fasermaterialien aus der etablierten Pultrusionstechnologie bekannt sind. Bevorzugt handelt es sich bei dem Fasermaterial um Kohlefasern, Glasfasern, Polymerfasern, insbesondere Aramidfasern, oder Textilfasern, besonders bevorzugt um Aramid- oder Kohlefasern. Das Fasermaterial kann in Form einzelner Fasern, Rovings und/oder Vliese, Geweben und/oder Gelegen eingesetzt werden. Bevorzugt wird das Fasermaterial in Form von Endlosfasern oder -rovings eingesetzt.

Bei der Formgebung ist es möglich, dass die Fasern in Verarbeitungsrichtung parallel zu einander ausgerichtet um den Schaumkern liegen. Bevorzugt jedoch bilden die Fasern um den Schaumkern eine Gewebestruktur. Durch diese Ausführung wird eine besondere mechanische Festigkeit des späteren Werkstücks erreicht. Besondere Varianten des Verfahrensschritts b), wie insbesondere modifizierte Pul-Preforming-, Pul-Winding- oder Pul-Braiding-Verfahren können erfindungsgemäß hier gleichsam zu Einsatz kommen. Es können auch mehrere dieser Varianten miteinander kombiniert werden oder einzelne Varianten in Serie mehrfach installiert sein. So ist beispielsweise eine Anordnung Pul-Braiding, unidirektionale Faserführung und erneutes Pul-Braiding beispielsweise denkbar. Details über diese Varianten können beispielsweise in der WO 2013/174665 nachgelesen werden.

In Verfahrensschritt c) erfolgt das Imprägnieren mit einem Harz. Als Harz, welches später das Matrixmaterial der Faser-Kunststoff-Verbundschale des Profils bildet, kann jedwedes für die Pultrusion geeignetes thermoplastisches Material bzw. nach Vernetzung zu einem Duroplasten umsetzbares Harz eingesetzt werden. Bevorzugt sind besagte, zu einem Duroplasten umsetzbare Harze. Insbesondere handelte s sich bei solchen um Polyester-, Vinylester-, Phenol-, PU- oder Epoxydharze, besonders bevorzugt um PU- oder Epoxydharze.

Verfahrensschritte d) und e): Nach oder gleichzeitig zur Imprägnierung mit dem Harz kann in Verfahrensschritten d) und e) eine Formgebung des Profils, z.B. durch kontinuierliches Thermoshaping, erfolgen. Diese Formgebung kann z.B. mittels einer oder mehrerer Werkzeugmuffen erfolgen. Insbesondere sind die Werkzeuge zur Formgebung dem RTM-Verfahren analoge Presswerkzeuge. Dazu werden für diesen Pressschritt der ansonsten kontinuierlich durchgeführte Transport des endlosen Schaumkerns, sowie die Umhüllung mit dem Fasermaterial gestoppt. Bevorzugt ist das Schaumkernmaterial dabei von dem Fasermaterial vollständig umgeben. Weiterhin ist es bevorzugt, dass mit den Presswerkzeugen die Enden des gepressten Abschnitts des endlosen Schaumkernstücks mit harzgetränkter Faserumwicklung so zusammengepresst werden, dass eine vollständige oder fast vollständige Umschließung des Schaumkerns mit dem harzgetränkten Fasermaterial gebildet wird. Die Temperatur für die endgültige Formgebung in Verfahrensschritt e) hängt vor allem von dem eingesetzten Harzsystem ab. Im Falle von duroplastisch aushärtenden Harzen erfolgen damit die Aushärtung des Deckmaterials und damit auch die Fixierung der gegebenen Form des Werkstücks. Die Aushärtung des Harzes, welches auch als Verstärkungsmaterial bezeichnet werden kann, erfolgt dabei in der Regel thermisch. Um gleichmäßig ausgehärtete Werkstücke zu gewährleisten, ist dabei auf eine gleichmäßige Temperaturverteilung innerhalb des Werkzeuges zu achten.

Die dazu verwendete Temperatur im Formgebungswerkzeug hängt von dem jeweilig verwendeten Harz ab und ist für den Fachmann leicht ermittelbar. Für einige Harze liegen solche Temperaturen zwischen 100 und 300 °C. Für Epoxidharze liegt diese Temperatur beispielsweise bevorzugt zwischen 20 und 100 °C, besonders bevorzugt zwischen 50 und 80 °C. Wie bereits ausgeführt kann es sich bei dem Harzsystem jedoch auch um ein thermoplastisches Material handeln. In diesem Fall ist es bevorzugt das Werkzeug innen auf oder über die Erweichungstemperatur dieser Thermoplaste zu heizen. Alternativ ist es auch möglich, dass das thermoplastische Harz in Verfahrensschritten c) bis e) oberhalb der Schmelz- bzw. Glasübergangstemperatur auf die Fasern aufgetragen wird, und die "Aushärtung" erst in Verfahrensschritt f) durch Kühlung erfolgt.

In einer besonderen Ausführungsform der Erfindung werden so genannte Hybridrovings eingesetzt. Diese werden auch Mingled oder Comingled Yarns genannt. Diese Hybridrovings werden als Faserbündel, die Fasern aus dem Fasermaterial der Deckschicht und weiteren Fasern, die aus dem das Matrixmaterial bildenden Thermoplasten bestehen, eingesetzt. Damit erfolgt Verfahrensschritt c) in gewisser Weise zum Teil zusammen mit Verfahrensschritt b) in der Art, dass hier die Fasern zusammen verwoben werden, und andererseits in Verfahrensschritt e), in dem die Thermoplast-Fasern das Matrixmaterial bildend aufgeschmolzen werden.

Die Kühlung kann schlicht bei der Entnahme durch die Umgebungstemperatur erfolgen. Dies kann zusätzlich z.B. durch Gebläse unterstützt werden. Auch ist es möglich, dass der Transportschlitten gekühlt ist. In letzterer Variante ist es bevorzugt, dass es einen Transportschlitten gibt, der alle gleichzeitig hergestellten Profile aufnehmen kann oder aber es für jedes dieser Profiile einen eigenen, parallel zu den anderen Transportschlitten bewegten Schlitten gibt. Idealerweise bildet dabei die Innenseite der Aufnahmevorrichtung des oder der Transportschlitten die Form der formgegebenen Abschnitte der Profile ab. Im Falle von thermoplastischen Harzen erfolgt dabei auch die Härtung der Deckschicht. Zur Kühlung kann ein Luft, Wasser oder andere Kühlmittel enthaltener Werkzeugmantel vorliegen. Die Kühlung erfolgt in der Regel bei Temperaturen zwischen 0 und 120 °C, bevorzugt zwischen 10 und 50 °C und besonders bevorzugt zwischen 20 und 30 °C.

Ein großer Vorteil der erfindungsgemäßen Formgebung ist, dass sie kontinuierlich erfolgen kann, und dass man so zunächst ein in Abschnitte unterteiltes Endlosprofil erhält. Dieses Endlosprofil wird am Ende der Anlage in Verfahrensschritt h) in einzelne Werkstücke mit gewünschter Länge vollautomatisch getrennt.

In Verfahrensschritt f)erfolgt der Transport der Schlitten, welche die geschlossenen Werkzeuge zur Formgebung aufweisen in Transportrichtung des umwickelten Schaumkerns in eine Position 2. Wenn diese Position 2 erreicht wird, erfolgt anschließend das Öffnen der Werkzeuge. Dabei können die Werkzeuge zur Formgebung auf einem gemeinsamen Schlitten montiert sein. Alternativ und genauso bevorzugt handelt es sich um mehrere, d.h. mindestens zwei Schlitten, die jeweils eins dieser Werkzeuge aufweisen. Letztere Variante hat den Vorteil, dass sich einzelne Werkzeuge schneller und einfacher, d.h. mit geringerer Standzeit bei Bedarf austauschen lassen. Die erste Variante hat den Vorteil, dass sie mit einer geringeren Investition und weniger Energiebedarf durchführbar ist.

Um das Verfahren kontinuierlich betreiben zu können, müssen dazu die Schlitten mit den Werkzeugen zur Formgebung einerseits und der oder die Transportschlitten in jeweils einander entgegengesetzter Richtung hin und her bewegt werden, wobei während der Bewegung entweder die Schlitten zur Formgebung oder der bzw. die Transportschlitten geschlossen und die jeweils andere Art Schlitten geöffnet sind. Dabei erreichen beide Arten Schlitten möglichst gleichzeitig den jeweiligen Wendepunkt, nach dessen Erreichen und einer benötigten Stillstandzeit die Schlitten in die jeweils entgegengesetzte Richtung bewegt werden. Während des Transports in Verfahrensschritt f) erfolgt parallel Verfahrensschritt b) für spätere Profile. So kann das Verfahren kontinuierlich durchgeführt werden.

Die erste Stillstandzeit betrifft Verfahrensschritte d) und e), sowie je nach Ausführungsform c). Bei diesem Stillstand sind die Werkzeugschlitten und die Transportschlitten in den voneinander entferntesten Positionen 1 bzw. 1 a. bei der zweiten Stillstandzeit erfolgen das Öffnen der Werkzeuge sowie das Schließen der Transportvorrichtung. Zu diesem Zeitpunkt sind die Schlitten auf den einander nächsten Positionen 2 bzw. 2a.

In Verfahrensschritt g) erfolgt darauf das Schließen eines Transportwerkzeugs auf einem oder mehreren weiteren Schlitten in Position 2a, welche sich in Transportrichtung des umwickelten Schaumkerns hinter den anderen Schlitten befinden. Darauf folgt der Transport des umwickelten Schaumkerns in Transportrichtung in eine Position 1a, sowie Rückführung des oder der Werkzeugschlitten auf die Position 1.

An dem ersten Wendepunkt der beiden Werkzeuge an den Positionen 1 und 1a sind die Schlitten wie beschrieben maximal weit voneinander entfernt. In dieser Stellung erfolgen bevorzugt gleichzeitig die Entnahme des fertigen Profils, bzw. - im Weiteren gleichbedeutend - Werkstücks aus dem oder den Transportschlitten und die Aufnahme das mit dem Fasermaterial umwickelten Schaumkerns in die Schlitten mit den Werkzeugen. Dazu können die Werkzeuge bzw. die Transportschlitten bereits auf dem letzten Wegstück vor dem Erreichen dieser Position geöffnet werden.

Zum Transport des Endlosprofils während des Verfahrens gibt es mehrere Möglichkeiten. So kann das Endlosprofil über Rollen oder Haken vor oder direkt hinter Verfahrensschritt b) geschoben werden. Es ist auch möglich, dass das Endlosprofil vor Verfahrensschritt h) mit entsprechenden Vorrichtungen gezogen wird. Bevorzugt erfolgt der Transport ausschließlich über die Schlitten, genauer über das jeweilige Werkzeug, das gerade einen Abschnitt des Endlosprofils enthält. Weiterhin ist eine Kombination der verschiedenen Varianten möglich.

Verfahrensschritt h): Nach dem Öffnen des Transportschlittens erfolgt das Trennen der einzelnen Profile mittels Schneiden Sägen oder mittels einer anderen geeigneten Methode. Dieses Trennen erfolgt in der Regel gleichzeitig zur Formgebung eines anderen Profilabschnitts in Verfahrensschritten d) und e), wenn zur Formgebung der Transport des Endlosprofils gestoppt ist. Nach dem Trennen erfolgen dann die Entnahme des fertigen Werkstücks beispielsweise mittels eines Roboterarms und die optionale Aufnahme in ein Lagersystem.

Die mittels des erfindungsgemäßen Verfahrens hergestellten Profilbauteile sind in Sandwichbauweise mit Schaumkernen ausgelegt. Ein großer Vorteil des erfindungsgemäßen, neuen Verfahrens ist, dass dieses in einem kontinuierlichen Prozess mit mindestens zwei zueinander parallel betriebenen Werkzeugen zur Formgebung durchgeführt werden kann. Dadurch können folgende Vorteile genutzt werden:
- Besonders hoher Durchsatz durch die Verwendung mehrerer Werkzeuge und gleichzeitig kurze Zykluszeiten. Dadurch Erreichung von hohen Stückzahlen und eine Großserientauglichkeit.
- Gleichzeitige Herstellung von Profilen mit unterschiedlicher Form, wenn unterschiedliche Werkzeuge zur Formgebung eingesetzt werden
- Kontinuierliche Herstellung komplexer Geometrien mit Hinterschnitten und Querschnittsänderungen
- Keine Handlingsprobleme mit den Preformfasern
- Die Werkzeuge sind temperierbar, dadurch können sowohl duroplastische als auch thermoplastische Matrixes verarbeitet werden.
- Die Profile werden durch die Werkzeuge und den Transportschlitten abgezogen und unter Spannung gehalten. Dadurch sind optimale Faserorientierungen erreichbar.

Mit diesem erfindungsgemäßen Verfahren können verschiedenartige Profile hergestellt werden. Die Profile können eine oder mehrere Kammern aufweisen. Profile mit einer Kammer können z.B. als Rundrohr oder auch als Kammerprofil in rechteckiger oder quadratischer Form vorliegen. Auch ist es möglich, Profile mit komplexer Form, d.h. zwei oder mehreren verschieden geformten oder unterschiedlich großen Kammern, herzustellen. Rundrohre können beispielsweise neben einer einfachen runden Form, mit rundem Schaumkern und rundem Mantel, z.B. auch einen runden Schaumkern und einen eckigen Mantel, bzw. einen eckigen Schaumkern und einen runden Mantel, aufweisen. Unabhängig von der Form und der Anzahl Kammern kann das Endlosprofil mit unterschiedlichen Wandstärken bzw. Schaumkerngrößen hergestellt werden.

Erfindungsgemäß ist es insbesondere möglich, insbesondere mittels des beschriebenen Pul-Shape-Verfahrens, gebogene oder auch in Transportrichtung ungleichmäßig geformte Werkstücke bzw. Profile zu realisieren.

Das für den Schaumkern verwendete Material ist bevorzugt Poly(meth)acrylimid, im Text kurz als P(M)I bezeichnet. Die Formulierung (Meth)acryl- steht dabei für Methacryl-, Acryl- oder für Mischungen aus beiden. Besonders bevorzugt sind PMI-Schäume. Solche PMI-Schäume werden normalerweise in einem zweistufigen Verfahren hergestellt: a) Herstellung eines Gusspolymerisats und b) Aufschäumen dieses Gusspolymerisats. Alternativ können aber auch Schaumkerne aus anderen Hartschaummaterialien, wie insbesondere PET-, PVC-, PU- oder PP-Schäume eingesetzt werden. PMI-Schäume haben dabei jedoch den großen Vorteil, dass diese im ersten und/bzw. zweiten Werkzeug nachschäumen und dadurch zu einer besonders guten Grenzhaftung zwischen Schaumkern und den Deckschichten führt.

Die als Kernmaterial für das Verfahren benötigten Schaumteile können entweder durch eine Herstellung mittels eines In-mold-Foamings hergestellt werden, oder aber bevorzugt aus aufgeschäumten Schaumplatten, welche als Gusspolymerisate hergestellt werden können, herausgeschnitten, gesägt oder gefräst werden. Dabei können bevorzugt mehrere Schaumteile aus einer Platte geschnitten werden. In einer besonderen Alternative kann auch der Verschnitt aus der Herstellung größerer PMI-Schaumteile, wie sie z.B. im Flugzeugbau oder bei der Herstellung von Windkraftwerken verwendet werden, optional nachgeschnitten werden und zum Einsatz kommen.

Die Herstellung solcher PMI-Schäume ist dem Fachmann grundsätzlich bekannt und kann beispielsweise in EP 1 444 293, EP 1 678 244 oder WO 2011/138060 nachgelesen werden.

Als Material für den Schaumkern werden besonders bevorzugt PMI-Schäume in einem Dichtebereich von 30 bis 200 kg/m³ eingesetzt. Als PMI-Schäume seien insbesondere ROHACELL^{®}-Typen der Firma Evonik Industries AG genannt.

Gesägte, geschnittene oder gefräste Schaumkernstücke haben dabei den Vorteil gegenüber mittels In-mold-Foaming hergestellten, dass diese an der Oberfläche offene Poren aufweisen. Beim Inkontaktbringen mit den Fasern und der anschließenden Imprägnierung mit dem Harz dringt ein Teil des Harzes in diese offenen Poren an der Schaumkernoberfläche ein. Dies hat den Vorteil, dass nach Aushärtung eine besonders starke Haftung an der Grenzfläche zwischen Schaumkern und Mantelmaterial erhalten wird.

Wie bereits ausgeführt können mittels des erfindungsgemäßen Verfahrens auch andere Hartschaumstoffe verarbeitet werden. Dabei kann es sich insbesondere um harte PET-, PVC-, PP- oder PU-Schäume handeln.

PVC-Hartschäume werden zumeist als Sandwich material im Bootsbau, Rotorblättern oder Kraftfahrzeugen im Verbund mit Deckschichten eingesetzt. PVC-Schaum ist im Dichtebereich von 25 bis 300 kg/m³ kommerziell verfügbar und wird in großem Umfang eingesetzt. PVC-Schäume weisen eine besonders hohe Hochtemperaturbeständigkeit, jedoch nur limitierte mechanische Belastbarkeiten auf.

PP-Schäume sind vor allem als Isolationsmaterial, in Transportbehältern und als Sandwichmaterial bekannt. PP-Schäume können Füllstoffe enthalten und sind zumeist in einem Dichtebereich zwischen 20 bis 200 kg/m³ kommerziell verfügbar. Zur besseren Anhaftung können insbesondere die Oberflächen eines PP-Schaums vor Verfahrensschritt a) mit einer Klebschicht oder einem Haftvermittler versehen werden.

PU-Hartschäume wiederum zeichnen sich gegenüber PU-Weichschäumen durch eine geschlossenere Porenstruktur und einen höheren Vernetzungsgrad aus. PU-Hartschäume können zusätzlich größere Mengen anorganischer Füllmaterialien enthalten.

Das erfindungsgemäße hergestellte, mit einem Hartschaum, wie bevorzugt einem PMI-Schaum gefüllte Profil zeichnet sich insbesondere dadurch aus, dass es sich bei dem Deckmaterial um mit einem Fasermaterial verstärkten Duroplasten und bei dem Schaumkern um einen PMI-Schaum handelt, und dass das PMI-Schaum gefüllte Profil keine Klebeschicht und keine Fügestellen aufweist. Weiterhin ist der Schaumkern vollständig oder mit nur sehr kleinen Lücken mit dem Deckmaterial umschlossen ist. Sehr kleine Lücken bedeutet dabei, dass bei der Formgebung in dem Presswerkzeug, bei dem die Enden des Abschnitts, wie zuvor beschrieben, zusammengepresst werden, nach dem Sägen oder Schneiden kleine Bereiche das Schaumkerns weiterhin sichtbar sein können. Insbesondere bevorzugt erfolgt das Pressen jedoch dergestalt, dass an dem fertigen Profil überhaupt kein Schaumkern von außen mehr zu erkennen ist. Gleichsam bevorzugt weist der Hartschaumkern an der Grenzfläche zwischen Hartschaumkern und dem Deckmaterial offene, mit Matrixmaterial gefüllte Poren auf.

In einer besonderen Ausführungsform kann der Hartschaum ein weiteres Material aus Metall oder einem anderen Kunststoff eingebettet in dem Schaummaterial enthalten. Dieses kann beispielsweise in Form eines Rohres vorliegen. Ein solches Rohr kann beispielsweise bei der Verwendung im Karosseriebau als Kabelleitung fungieren.

Ergänzend oder unabhängig davon kann der Hartschaum Inserts, insbesondere metallische Inserts aufweisen. Solche Inserts dienen später als Anbindungsstellen für das Bauteil bei der Verwendung z.B. im Automobil- oder Flugzeugbau. Dabei kann als Insert z.B. ein Metallblock eingebracht werden, in den dann anschließend ein Gewinde, welches später dann verschraubt werden kann, eingefräst wird.

Die erfindungsgemäß hergestellten Profile mit einem Schaumkern, insbesondere mit einem PMI-Schaumkern bzw. die nach dem erfindungsgemäßen Verfahren hergestellten, einen Schaumkern aufweisenden Formkörper können vielfältig Anwendung finden. Dabei ist ein Hauptaugenmerk, ohne dass diese Beschreibung in irgendeiner Form einschränkend zu verstehen ist, auf den Leichtbau gerichtet. Dies betrifft insbesondere den Automobil-, Nutzfahrzeugs-, Schiffs-, Flugzeug-, Hubschrauberbau, die Konstruktion von Anlagen zur Windenergiegewinnung, die Robotertechnik und die Raumfahrt. Im Automobilbau sei insbesondere die Konstruktion von Dachriegeln oder Bodenverstrebungen beispielhaft genannt. In Flugzeugen sein beispielhaft die Verwendung als Kabinenbodenabstützung aufgeführt. Bei einem solchen Einsatz stellen die erfindungsgemäßen Profile eine mechanisch nahezu gleichwertige, dabei jedoch deutlich leichtere Alternative zu Aluminium oder Stahl dar.

### Index zu den Zeichnungen

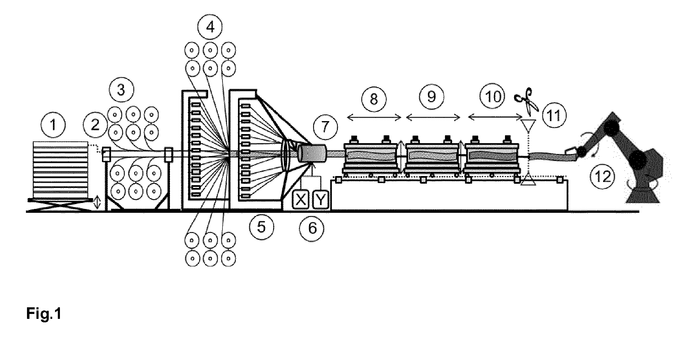

Fig.1 stellt beispielhaft den schematischen Aufbau einer für das erfindungsgemäße Verfahren in der Ausführungsform Pul-Press-Verfahren mit vorgeschalteter Harzinjektion geeignete Anlage dar. Folgend der Index zur Fig.1:
(1) Schaumkern (Vorlage)
(2) Schaumkern (Einfügen in Anlage und Verbinden mit Ende des letzten Schaumkerns)
(3), (4) Faserzuführung, unidirektional
(5) Wickel-, Flechtvorrichtung (Pul-Braiding)
(6) Harzreservoir (hier 2K-System mit Komponenten A und B)
(7) Harzimpregnation
(8) Werkzeug 1 in Schlittenform zur Formgebung
(9) Werkzeug 2 in Schlittenform zur Formgebung
(10) Transportschlitten, optional mit Kühlwerkzeug
(11) Schneidevorrichtung
(12) Handlingsystem für fertige Profile

Zu der Zeichnung sei angemerkt, dass diese nur schematisch die genannte Ausführungsform darstellt. So ist z.B. die Schiene, auf denen das zweite und das dritte Werkzeug bewegt werden, unter Umständen deutlich länger. Auch ist die Anlage wie dargestellt mit zwei unidirektionalen Faserführungen und zwei Pul-Braiding-Vorrichtungen ausgestattet. Von diesen vier Vorrichtungen reicht naturgemäß auch eine, um das Verfahren durchzuführen.

## Patentansprüche

1. Verfahren zur kontinuierlichen Herstellung von faserverstärkten, mit einem Schaumkern gefüllten Profilen, **dadurch gekennzeichnet, dass** das Verfahren folgende Verfahrensschritte aufweist:
a) Einführen von Schaumkernen und Verbinden des neu eingeführten Schaumkerns mit dem Ende des zuletzt eingeführten Schaumkerns in eine Pultrosionsanlage,
b) Umwickeln des Schaumkerns mit einem Fasermaterial,
c) Imprägnieren des gewickelten Fasermaterials mit einem Harz,
d) gleichzeitiges Einlegen unterschiedlicher Abschnitte des umwickelten Schaumkerns in mindestens zwei Werkzeugen, wobei sich diese Werkzeugen auf in Reihe stehenden Werkzeugschlitten oder in Reihe auf einem Werkzeugschlitten, in Position 1 am Ende der Pultrusionsanlage befinden und Schließen der Werkzeuge,
e) Heizen der Werkzeuge, wobei ein Formen des umwickelten Schaumkerns, sowie ein optionales Aushärten des Harzes erfolgt,
f) Transport der Schlitten in Transportrichtung des umwickelten Schaumkerns in eine Position 2 und anschließendes Öffnen der Werkzeuge,
g) Schließen eines Transportwerkzeugs auf einem weiteren Schlitten in Position 2a" welcher sich in Transportrichtung des umwickelten Schaumkerns hinter den anderen Schlitten befindet und Transport des umwickelten Schaumkerns in Transportrichtung in eine Position 1a, sowie Rückführung der Werkzeugschlitten auf die Position 1,
h) Öffnen des Transportschlittens, Trennen einzelner Profile mittels Schneiden, Sägen oder einer anderen Methode und Entnahme des fertigen Werkstücks, sowie parallele Durchführung der Verfahrensschritte a) bis d).

2. Verfahren gemäß Anspruch 1, **dadurch gekennzeichnet, dass** der Schaumkern in Form mehrerer, aneinander gereihter Einzelstücke kontinuierlich in die Pultrusionsanlage geführt wird und diese Einzelstücke mittels Kleben, Stecken oder durch Hinzufügen eines Kupplungsstücks miteinander verbunden werden.

3. Verfahren gemäß Anspruch 1 oder 2, **dadurch gekennzeichnet, dass** es sich bei dem Fasermaterial um Kohlefasern, Glasfasern, Polymerfasern, insbesondere Aramidfasern, oder Textilfasern, bevorzugt um Aramid- oder Kohlefasern, die in Form einzelner Fasern, Rovings und/oder Vliese, Geweben und/oder Gelegen eingesetzt werden, handelt, und dass es sich bei dem Harz um einen Duroplasten, insbesondere um ein Material, das aus einem Polyester-, Vinylester-, Phenol-, PU- oder Epoxydharz, bevorzugt aus einem PU- oder einem Epoxydharz gebildet wurde, handelt.

4. Verfahren gemäß mindestens einem der Ansprüche 1 bis 3, **dadurch gekennzeichnet, dass** es sich bei dem Schaumkern um einen Kern aus Poly(meth)acrylimid handelt.

5. Verfahren gemäß Anspruch 4, **dadurch gekennzeichnet, dass** als Material für den Schaumkern Polymethacrylimid in einem Dichtebereich von 30 bis 200 kg/m³ verwendet werden.

6. Verfahren gemäß mindestens einem der Ansprüche 1 bis 5, **dadurch gekennzeichnet, dass** Verfahrensschritt b) analog einem Pultrusionsverfahren mit Schaumkernzuführung in Form eines modifizierten Pul-Preforming-, Pul-Winding- oder Pul-Braiding-Verfahrens erfolgt.

7. Verfahren gemäß mindestens einem der Ansprüche 1 bis 6, **dadurch gekennzeichnet, dass** das Verfahren als Pul-Shape-Verfahren durchgeführt wird, bei dem die Verfahrensschritte c), d) e) und f) in den jeweils gleichen Werkzeugen durchgeführt werden.

8. Verfahren gemäß mindestens einem der Ansprüche 1 bis 6, **dadurch gekennzeichnet, dass** das Verfahren als Pul-Press-Verfahren durchgeführt wird, bei dem die Verfahrensschritte a) bis d) in voneinander getrennten Werkzeugen bzw. Vorrichtungen erfolgen, optional zwischen Verfahrensschritten c) und d) in weiteren Werkzeugen ein Vorformen des umwickelten Schaumkerns erfolgt und Verfahrensschritt c) vor Verfahrensschritt b) erfolgt.

9. Verfahren gemäß mindestens einem der Ansprüche 1 bis 8, **dadurch gekennzeichnet, dass** die Verfahrensschritte d) bis f) in zwei oder drei Werkzeugen parallel durchgeführt werden.

10. Verfahren gemäß mindestens einem der Ansprüche 1 bis 9, **dadurch gekennzeichnet, dass** die Werkzeuge der Verfahrensschritte d) bis f) unterschiedliche Formen abbilden und somit zu unterschiedlichen Profilen als Endprodukt führen.
